# EUROPEAN PATENT APPLICATION

(11) **EP 4 800 808 A1**
(43) Date of publication of application: **02.09.2026**
(21) Application number: 26160814.5
(22) Date of filing: 25.02.2026
(51) Int. Cl.: H01M 10/653, H01M 50/103, H01M 50/15, H01M 50/176, H01M 50/186, H01M 50/593, H01M 50/184, H01M 50/19, H01M 50/198, H01M 50/548, H01M 50/553

(54) **BATTERY CELL**

(30) Priority: 28.02.2025 KR 20250027047; 22.04.2025 KR 20250052469
(71) Applicant: SK On Co., Ltd., Seoul 03161 (KR)
(72) Inventor: CHEONG, Hoemin, 34124 Daejeon (KR); PARK, Seong Che, 34124 Daejeon (KR); JU, Seung Hoon, 34124 Daejeon (KR)
(74) Representative: Stolmár & Partner Patentanwälte PartG mbB

(57) **Abstract**

A battery cell according to an embodiment of the present disclosure includes an electrode assembly; a case including at least one opening and including an accommodation portion accommodating the electrode assembly; and a cap assembly coupled to the case, wherein the cap assembly includes a cap plate coupled to the opening; and a cap insulator disposed between the cap plate and the electrode assembly to insulate the cap plate from the electrode assembly, and wherein the cap insulator includes a first insulator formed of a first material, and a second insulator formed of a second material, different from the first material.

## Description

### TECHNICAL FIELD

The disclosure and implementations disclosed in this patent document generally relate to a battery cell.

### BACKGROUND

A secondary battery may be an energy storage means capable of charging and discharging electricity. Secondary batteries may be widely used in a variety of means using electricity as a power source. For example, secondary batteries may be used as energy storage means in a variety of devices, from small devices such as mobile phones, laptops, tablets, or the like to large devices such as vehicles, aircraft, or the like. In particular, in recent years, secondary batteries have been actively sought to be used as power sources of vehicles.

Secondary batteries may be classified as lead-acid batteries, nickelcadmium batteries, nickel-hydrogen batteries, lithium-ion batteries, or the like, depending on a material of an electrode or the like. The secondary battery according to each type may be appropriately selected according to design capacity, usage environment, or the like. Lithium-ion batteries may implement relatively high voltages and capacities, as compared to other types of secondary batteries. Accordingly, lithium-ion batteries may be widely used in fields requiring high-density energy storage means such as vehicle battery packs or the like.

A secondary battery, such as a lithium-ion battery, commonly contains a positive electrode material, a negative electrode material, a separator, an electrolyte, and the like, as main components. The positive electrode material and the negative electrode material may be disposed with the separator formed of an insulating material interposed therebetween, and charging or discharging of electricity may be performed by movement of ions through the electrolyte.

### SUMMARY

According to an aspect of the present disclosure, a battery cell including an improved cap assembly may be provided.

A battery cell of the present disclosure may be widely applied to green technologies such as electric vehicles, battery charging stations, and other photovoltaic power generation devices, wind power generation devices using batteries, or the like.

In addition, a battery cell of the present disclosure may be used in eco-friendly electric vehicles, hybrid vehicles, or the like to ameliorate the effects of climate change by suppressing air pollution and greenhouse gas emissions.

An object of the present disclosure is not limited to the above-mentioned object, and other objects not mentioned will be clearly understood by those skilled in the art to which the present disclosure belongs from the following description.

A battery cell according to an embodiment of the present disclosure includes an electrode assembly; a case including at least one opening and forming an accommodation portion accommodating the electrode assembly; and a cap assembly coupled to the case, wherein the cap assembly includes a cap plate coupled to the opening; and a cap insulator disposed between the cap plate and the electrode assembly to insulate the cap plate from the electrode assembly, and wherein the cap insulator includes a first insulator formed of a first material, and a second insulator formed of a second material, different from the first material.

In an embodiment, the first material may be formed of a material having a heat deflection temperature higher than a heat deflection temperature of the second material.

In an embodiment, at least a portion of the first insulator may be disposed in and coupled to the second insulator.

In an embodiment, the second insulator may include a first surface, one surface, and a second surface, the other surface, among both surfaces of the second insulator, and a portion of the first insulator may pass through both the first surface and the second surface.

In an embodiment, the first insulator may include a body portion including an insertion hole; and at least one coupling unit connected to an outer circumferential surface of the body portion and coupled to the second insulator.

In an embodiment, the coupling unit may include a first support portion facing and supporting the first surface of the second insulator; a second support portion facing and supporting the second surface of the second insulator; and a connection support portion connecting the first support portion and the second support portion.

In an embodiment, the second insulator may include a protruding portion coupled to at least one of the first support portion or the second support portion, and the protruding portion may have a cross-sectional area increasing in an outward direction.

In an embodiment, the protruding portion may include a first protruding portion coupled to the first support portion, and a second protruding portion coupled to the second support portion, and a protrusion direction of the first protruding portion may be opposite to a protrusion direction of the second protruding portion.

In an embodiment, the cap assembly may include an electrode terminal portion electrically connected to the electrode assembly, with the cap plate and the cap insulator interposed therebetween.

In an embodiment, the electrode assembly may be welded and electrically connected to the electrode terminal portion through an electrode pin.

In an embodiment, a portion of the electrode terminal portion or a portion of the electrode pin may pass through the cap insulator.

A battery cell according to an embodiment of the present disclosure includes a case including at least one opening; and a cap assembly accommodating an electrode assembly together with the case, wherein the cap assembly includes a cap plate coupled to the opening; and a cap insulator disposed between the cap plate and the electrode assembly to insulate the cap plate from the electrode assembly, wherein the cap insulator includes a first insulator formed of a first material, and a second insulator formed of a second material, different from the first material, and wherein the first insulator and the second insulator are integrally manufactured through injection molding.

In an embodiment, at least a portion of the first insulator may be disposed in and coupled to the second insulator.

In an embodiment, the second insulator may include a first surface, one surface, and a second surface, the other surface, among both surfaces of the second insulator, and a portion of the first insulator may pass through both the first surface and the second surface.

In an embodiment, the cap assembly may include an electrode terminal portion welded and electrically connected to an electrode pin of the electrode assembly.

In an embodiment, a portion of the electrode terminal portion or a portion of the electrode pin may pass through the cap insulator.

In an embodiment, the first material may be formed of a material with a higher melting point than the second material.

In an embodiment, the cap insulator may be manufactured through double injection, and after the first material may be first injected to manufacture the first insulator, the second material may be injected to manufacture the second insulator.

### BRIEF DESCRIPTION OF DRAWINGS

Certain aspects, features, and advantages of the present disclosure may be illustrated by the following detailed description with reference to the accompanying drawings.
FIG. 1 is a perspective view of a battery cell including a cap assembly according to an embodiment of the present disclosure.
FIG. 2 is an exploded perspective view of a battery cell including a cap assembly according to an embodiment of the present disclosure.
FIG. 3 is a cross-sectional view of FIG. 1, taken along line I-I', according to an embodiment of the present disclosure.
FIGS. 4A and 4B are cross-sectional views of a cap assembly of FIG. 2, taken along line II-II', according to an embodiment of the present disclosure.
FIG. 5 is an exploded perspective view of a cap assembly according to an embodiment of the present disclosure.
FIG. 6 is a perspective view of a lower insulator according to an embodiment of the present disclosure.
FIG. 7 is a perspective view of a first insulator according to an embodiment of the present disclosure.
FIG. 8 is a perspective view of a second insulator according to an embodiment of the present disclosure.
FIG. 9 is a cross-sectional view of FIG. 8, taken along line III-III', according to an embodiment of the present disclosure.
FIG. 10 is a perspective view of a battery cell including a cap assembly according to an embodiment of the present disclosure.
FIG. 11 is an exploded perspective view of a battery cell including a cap assembly according to an embodiment of the present disclosure.
FIG. 12 is a perspective view of a cap insulator according to an embodiment of the present disclosure.
FIG. 13 is a cross-sectional view of FIG. 12, taken along line IV-IV', according to an embodiment of the present disclosure.

### DETAILED DESCRIPTION

Hereinafter, a battery cell 10 according to the present disclosure will be described in detail with reference to the drawings.

In a battery cell of the present disclosure, a width direction may mean a direction (X-axis) crossing tabs protruding in different directions, a height direction may mean a direction (Y-axis), perpendicular to the width direction, on a surface on which a tab is formed, and a thickness direction may mean a direction (Z-axis), perpendicular to the width direction and the height direction.

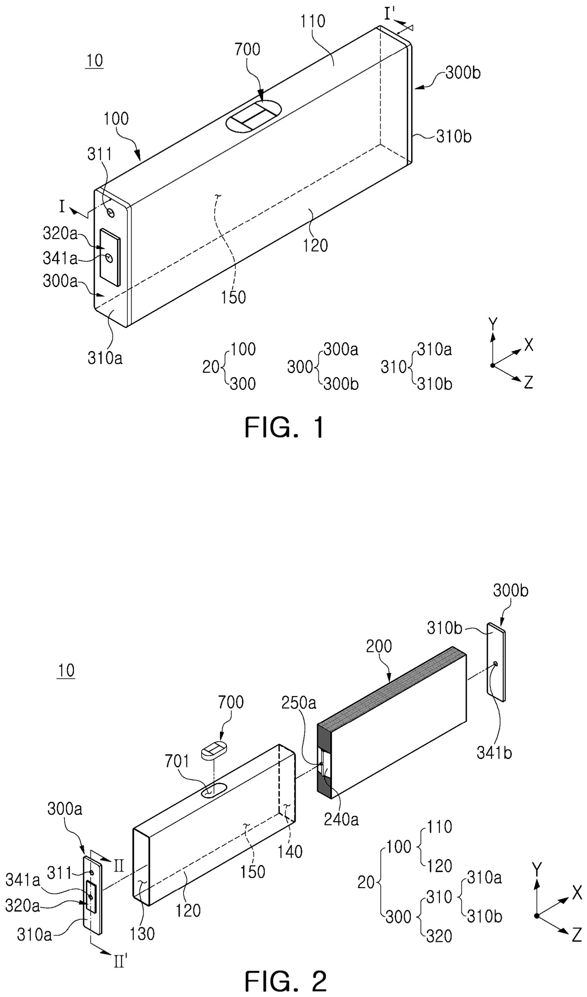

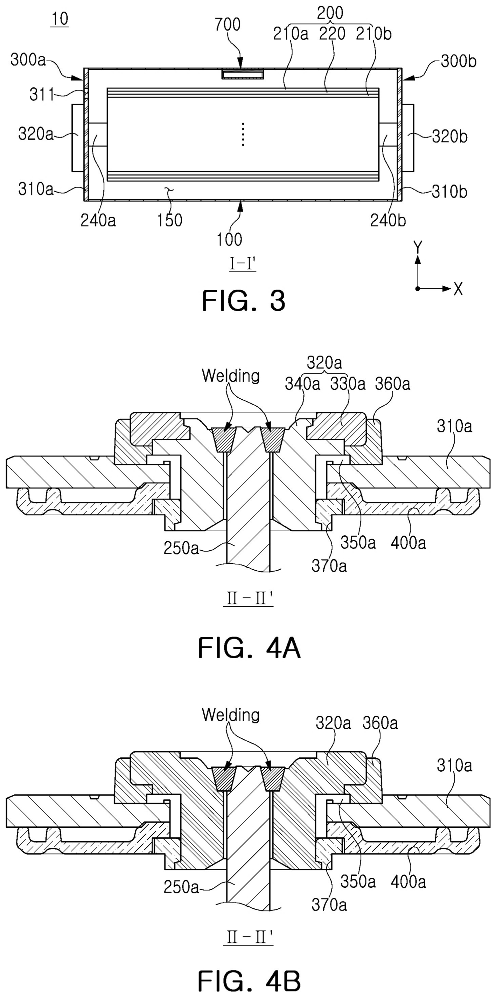

FIG. 1 is a perspective view of a battery cell 10 including a cap assembly 300 according to an embodiment of the present disclosure, FIG. 2 is an exploded perspective view of a battery cell 10 including a cap assembly 300 according to an embodiment of the present disclosure, and FIG. 3 is a cross-sectional view of FIG. 1, taken along line I-I', according to an embodiment of the present disclosure.

Referring to FIGS. 1 to 3, a battery cell 10 may include a cell housing 20 including a case 100 and a cap assembly 300.

In this case, the cell housing 20 may be provided with an accommodation portion 150 in which an electrode assembly 200 is accommodated.

The cell housing 20 may include a case 100 having a structure in which both ends are open, and a cap assembly 300 coupled to the both open ends of the case 100.

The case 100 may form at least a portion of the cell housing 20 of the battery cell 10, and may be provided with an accommodation portion 150 in which the electrode assembly 200 is accommodated by coupling to the cap assembly 300. The case 100 may be provided with the accommodation portion 150, and may accommodate the electrode assembly 200 in the accommodation portion 150.

In this case, the accommodation portion 150 may accommodate an electrolyte together with the electrode assembly 200.

The case 100 may be provided with aluminum, and the case 100 may be referred to as a can or a housing.

The case 100 may have a rectangular parallelepiped shape in which at least a portion thereof is open. For example, the case 100 may have a rectangular parallelepiped shape in which a first side surface 110 and a second side surface 120 having a width, greater than a width of the first side surface 110, are coupled to each other, and both ends thereof are open.

The case 100 may include the first side surface 110 and the second side surface 120, and may be provided as a hollow hexahedron extending in the width direction (X-axis direction) of the battery cell 10 and in which both ends thereof are open.

In this case, among the both open ends of the case 100, one end may be referred to as a first opening 130, and the other end may be referred to as a second opening 140.

The cell housing 20 may include a pair of cap assemblies 300, and the cap assembly 300 may be provided to be coupled to both ends of the case 100, respectively.

In the cap assembly 300, the cap assembly 300 coupled to one end of the case 100 may be referred to as a first cap assembly 300a, and the cap assembly 300 coupled to the other end may be referred to as a second cap assembly 300b.

For example, the first cap assembly 300a may seal the first opening 130 of the case 100, and the second cap assembly 300b may seal the second opening 140 of the case 100.

Referring to FIG. 3, the electrode assembly 200 may include an electrode plate 210, a separator 220, and an electrode tab 240.

The electrode plate 210 may include a first electrode plate 210a and a second electrode plate 210b, provided to have different polarities, and the separator 220 may be an insulator interposed between the first electrode plate 210a and the second electrode plate 210b.

In this case, when the first electrode plate 210a is a positive electrode plate, the second electrode plate 210b may be a negative electrode plate, and when the first electrode plate 210a is a negative electrode plate, the second electrode plate 210b may be a positive electrode plate.

The electrode assembly 200 may be provided such that the first electrode plate 210a and the second electrode plate 210b, having different polarities, and the separator 220 are repeatedly disposed.

The electrode assembly 200 may have a winding type, a stacking type, a z-folding type, or a stack-folding type.

Each of the electrode plates 210 may have a structure in which a negative electrode active material or a positive electrode active material is coated on a foil.

For example, the negative electrode plate may be formed by coating graphite or the like on a copper or nickel foil, and the positive electrode plate may be formed by coating a transition metal oxide active material on an aluminum foil.

The electrode tab 240 may be provided to electrically connect a plurality of first electrode plates 210a and a plurality of second electrode plates 210b, respectively.

For example, the electrode tab 240 may be provided as at least two electrode tabs 240, one electrode tab 240 may be electrically coupled to the first electrode plates 210a, and the other electrode tab 240 may be electrically coupled to the second electrode plates 210b.

In this case, the electrode tab 240 electrically coupled to the first electrode plates 210a may be referred to as a first electrode tab 240a, and the electrode tab 240 electrically coupled to the second electrode plates 210b may be referred to as a second electrode tab 240b.

In this case, the first electrode tab 240a and the second electrode tab 240b may be provided in combination with an electrode pin 250. The electrode pin 250 electrically coupled to the first electrode tab 240a may be referred to as a first electrode pin 250a, and the electrode pin 250 electrically coupled to the second electrode tab 240b may be referred to as a second electrode pin 250b.

The cap assembly 300 may include a cap plate 310 coupled to the case 100 to seal the case 100 in which one side is open, at least.

The cap plate 310 may be formed of aluminum or a material including aluminum. The cap plate 310 may be welded to the case 100 by ultrasonic welding, laser welding, or the like along an edge portion.

The cap plate 310 provided in the cap assembly 300 of the first cap assembly 300a or the second cap assembly 300b may include an electrolyte injection port 311 through which an electrolyte may be injected into the cell housing 20.

In this case, the electrolyte injection port 311 may be sealed with a stopper or the like after the electrolyte is injected.

In this case, the cap plate 310 coupled to the first cap assembly 300a may be referred to as a first cap plate 310a, and the cap plate coupled to the second cap assembly 300b may be referred to as a second cap plate 310b.

The cap assembly 300 may include an electrode terminal portion 320 provided on a surface, opposite to a surface of the cap plate 310 facing an internal space of the case 100.

In this case, the electrode terminal portion 320 may have positive or negative polarity. The electrode terminal portion 320 may include a first electrode terminal portion 320a and a second electrode terminal portion 320b.

For example, the first electrode terminal portion 320a disposed in the first cap assembly 300a may have negative polarity, and the second electrode terminal portion 320b disposed in the second cap assembly 300b may have positive polarity.

In this case, the first electrode terminal portion 320a may be electrically connected to the negative electrode plate through the first electrode tab 240a, and the second electrode terminal portion 320b may be electrically connected to the positive electrode plate through the second electrode tab 240b.

In addition, the first electrode terminal portion 320a disposed in the first cap assembly 300a may have positive polarity, and the second electrode terminal portion 320b disposed in the second cap assembly 300b may have negative polarity.

In this case, the first electrode terminal portion 320a may be electrically connected to the positive electrode plate through the first electrode tab 240a, and the second electrode terminal portion 320b may be electrically connected to the negative electrode plate through the second electrode tab 240b.

Since components of the cap assembly 300 described above are merely illustrative, some of the components of the cap assembly 300 may be omitted or other components not described may be added.

A portion of the cell housing 20 may include a vent hole 701 provided to communicate with an external space, and the vent hole 701 may be sealed by a venting device 700. In this case, gases in the case 100 may be discharged through the vent hole 701.

For example, the vent hole 701 may be provided in the first side surface 110 of the case 100.

Referring to FIG. 1, in the cell housing 20, the first cap assembly 300a, the second cap assembly 300b, the first side surface 110, and the second side surface 120 may be coupled to each other to seal an internal space of the cell housing 20.

The vent hole 701 may be provided in at least one of the first side surface 110, the second side surface 120, the first cap assembly 300a, or the second cap assembly 300b to connect an internal space of the case 100 to an external space.

In this case, the vent hole 701 may be formed as a hole, and the hole may have various shapes.

Gases may be generated in the battery cell 10 due to external impact, overcharge, or the like during use of a battery, and the generated gases may increase a pressure in the battery cell 10, thereby degrading performance of the battery cell 10 or damaging the battery cell 10.

Therefore, the gases generated in the battery cell 10 may be removed or emitted to an external space of the battery cell 10 through the vent hole 701.

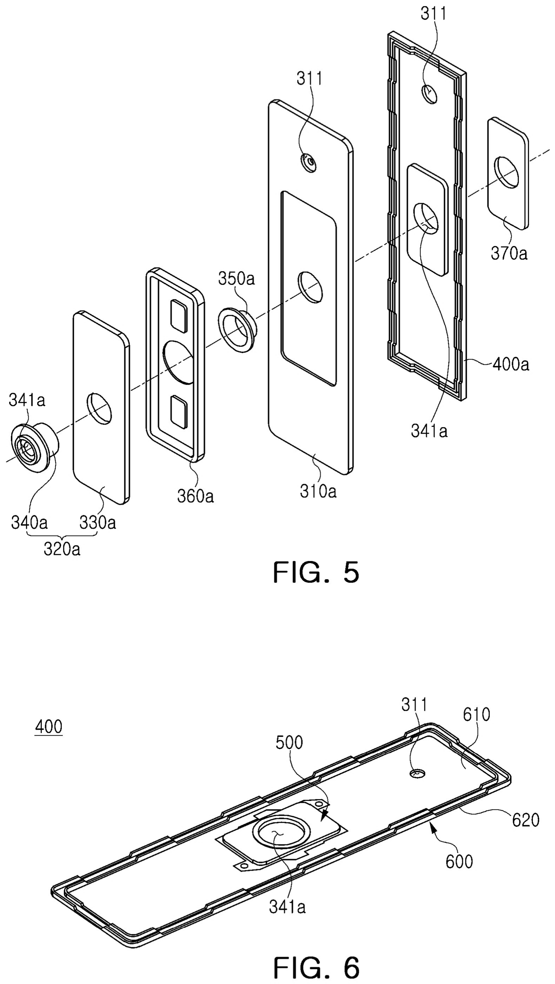

FIGS. 4A and 4B are cross-sectional views of a cap assembly of FIG. 2, taken along line II-II', according to an embodiment of the present disclosure, and FIG. 5 is an exploded perspective view of a cap assembly according to an embodiment of the present disclosure.

A cap assembly 300 described in FIGS. 4A, 4B, and 5 may correspond to the cap assembly 300 described in FIGS. 1 to 3, and thus a repeated description thereof may be omitted.

Hereinafter, for description, a first cap assembly 300a will be described first.

The first cap assembly 300a may include a first electrode terminal portion 320a electrically connected to an electrode assembly 200, and a first cap plate 310a supporting the first electrode terminal portion 320a.

In addition, the first cap assembly 300a may further include a first terminal insulator 360a and a first gasket 350a, electrically separating the first electrode terminal portion 320a from the first cap plate 310a.

In addition, the first cap assembly 300a may further include a first cap insulator 400a preventing the first cap plate 310a from directly short-circuiting with the electrode assembly 200.

The first electrode terminal portion 320a of the first cap assembly 300a may include a first terminal unit 330a and a first rivet 340a.

The first terminal unit 330a may be disposed on the first cap plate 310a to function as a connection terminal in which a battery cell 10 is electrically connected to an external component (e.g., a conductive busbar).

To this end, the first terminal unit 330a may be provided as a plate-shaped member formed of a conductive metal such as aluminum or an aluminum alloy. A material of the first terminal unit 330a is not limited to aluminum.

The first rivet 340a may be coupled to the first terminal unit 330a. For example, the first rivet 340a may pass through the first terminal unit 330a to be riveted to the first terminal unit 330a. Furthermore, the first rivet 340a and the first terminal unit 330a may be coupled to each other by laser welding.

The first rivet 340a may pass through both the first terminal unit 330a and the first cap plate 310a, and an end portion thereof may be disposed to oppose one side of the electrode assembly 200.

The first rivet 340a may include a first insertion hole 341a configured to allow a first electrode pin 250a to be inserted. The first insertion hole 341a may have a shape of a hole penetrating the first rivet 340a.

The first electrode pin 250a may be inserted into and joined to the first insertion hole 341a of the first rivet 340a, to be electrically connected to the first rivet 340a.

The first rivet 340a may be formed of a material, different from a material forming the first terminal unit 330a.

For example, the first terminal unit 330a may be formed of aluminum or an aluminum alloy, and the first rivet 340a may be formed of copper or a copper alloy. The first rivet 340a may be formed of the same material as the material forming the first terminal unit 330a.

Referring to FIG. 4B, a first electrode terminal portion 320a may be provided as an integrated shape with a first rivet 340a and a first terminal unit 330a.

For example, the first electrode terminal portion 320a itself may be riveted to a cap plate.

In this case, when the first electrode terminal portion 320a is integrally provided, a configuration of a first cap assembly 300a may be simplified, thereby effectuating advantages of reducing a process time required for assembly and facilitating manufacturing.

A first cap plate 310a may be configured to be coupled to a case 100 to support the first electrode terminal portion 320a.

The first cap plate 310a may be configured to close a first opening 130 of the case 100.

For example, the first cap plate 310a may be provided as a plate-shaped member, and may be joined to the case 100 by laser welding or ultrasonic welding to close the first opening 130. For ease of welding, the first cap plate 310a may be formed of the same material as the case 100.

For example, both the first cap plate 310a and the case 100 may be formed of aluminum or an aluminum alloy.

A material forming the first cap plate 310a is not limited thereto, and may be formed of any material as long as the material can close the first opening 130 of the case 100 and can stably protect components therein.

When the first cap plate 310a includes a conductive material, insulating members formed of an insulating material may be disposed between the first electrode terminal portion 320a and the first cap plate 310a to electrically separate the first electrode terminal portion 320a and the first cap plate 310a from each other.

For example, referring to FIG. 5, a first terminal insulator 360a and a first gasket 350a into which a first rivet 340a is inserted may correspond to such an insulating member on a rear surface of a first terminal unit 330a.

The first terminal insulator 360a may include an insulating material (e.g., polymer), and may be disposed between the first terminal unit 330a and a first cap plate 310a to insulate the first terminal unit 330a and the first cap plate 310a from each other.

The first gasket 350a may include an insulating material (e.g., polymer), and may be disposed between the first rivet 340a and the first cap plate 310a to insulate the first rivet 340a and the first cap plate 310a from each other.

The first gasket 350a may be disposed to surround the first rivet 340a to prevent a gap between the first rivet 340a and the first cap plate 310a, thereby preventing a foreign substance outside a battery cell 10 from flowing into the gap or an electrolyte inside the battery cell 10 from flowing out through the gap.

An insulating member may be disposed on a rear surface of the first cap plate 310a to prevent the first cap plate 310a from being unintentionally short-circuited with a component (e.g., electrode assembly 200 or electrode pin 250) accommodated in a case 100.

For example, in a first cap assembly 300a, a first cap insulator 400a covering the rear surface of the first cap plate 310a may correspond to such an insulating member. (In this case, the 'rear surface of the first cap plate 310a' may mean a surface facing an accommodation portion 150 of the case 100 from the first cap plate 310a.)

The first cap insulator 400a may include an insulating material to prevent the first cap plate 310a from being short-circuited by contacting the electrode assembly 200 or the electrode pin 250.

The first cap assembly 300a may further include a first fixing member 370a coupled to the first rivet 340a.

The first fixing member 370a may be disposed on the rear surface of the first cap plate 310a and coupled to an end portion of the first rivet 340a.

The first fixing member 370a may be configured to have a width, greater than a width of a hole through which the first rivet 340a passes from the first cap plate 310a.

In this case, the term "width" may refer to a length in a direction, perpendicular to a direction in which the first rivet 340a pass through the first cap plate 310a.

The first fixing member 370a may be clinching (riveting) coupled to an end portion of the first rivet 340a through which the first cap assembly 300a passes, thereby preventing components forming the first cap assemblies 300a from being separated from each other.

A second cap assembly 300b may include a second electrode terminal portion 320b electrically connected to the electrode assembly 200, and a second cap plate 310b supporting the second electrode terminal portion 320b.

Furthermore, the second cap assembly 300b may further include a second gasket 350b that closes a gap between a second rivet 340b and the second cap plate 310b. Furthermore, the second cap assembly 300b may further include a second cap insulator 400b preventing the second cap plate 310b from directly short-circuiting with the electrode assembly 200.

Hereinafter, the second cap assembly 300b may be provided substantially the same as a configuration of the first cap assembly 300a, and hereinafter, overlapping descriptions will be omitted.

At least one of the first cap assembly 300a and the second cap assembly 300b may include an electrolyte injection port 311 used to inject an electrolyte into the case 100.

For example, referring to FIG. 5, the first cap assembly 300a may include an electrolyte injection port 311.

The electrolyte injection port 311 may be provided on the cap plate 310. After the electrolyte is injected, the electrolyte injection port 311 may be sealed with a stopper or the like to prevent the electrolyte from flowing out of the battery cell 10.

In this case, the electrolyte injection port 311 may be provided in both the first cap assembly 300a and the second cap assembly 300b or only in either cap assembly.

A first electrode terminal portion 320a of the first cap assembly 300a and a second electrode terminal portion 320b of the second cap assembly 300b may be configured to have different polarities.

For example, in the battery cell 10, the first electrode terminal portion 320a may be electrically connected to negative electrode plates, and the second electrode terminal portion 320b may be electrically connected to positive electrode plates (or vice versa).

The first cap assembly 300a of the battery cell 10 may be coupled to the case 100 in the X-axis direction, and accordingly, the first electrode terminal portion 320a of the first cap assembly 300a may be electrically connected to the electrode assembly 200 through a first electrode pin 250a.

The first electrode pin 250a may be provided as a separate member assembled with a first electrode tab 240a, or may be provided integrally with the first electrode tab 240a.

The first electrode terminal portion 320a of the first cap assembly 300a may be electrically connected to the first electrode pin 250a.

The first electrode terminal portion 320a may include a first terminal unit 330a having a state of being exposed to an outside of the first cap assembly 300a, and a first rivet 340a coupled to the first terminal unit 330a.

Hereinafter, it will be described as an example that the first terminal unit 330a and the first rivet 340a are separately configured, but are not limited thereto, and the first terminal unit 330a and the first rivet 340a may be configured as one.

The first rivet 340a may include a first insertion hole 341a into which the first electrode pin 250a is inserted. The first electrode pin 250a may be welded and coupled to the first insertion hole 341a while being inserted into the first insertion hole 341a.

For example, referring again to FIG. 4A, the first electrode pin 250a may be inserted into the first insertion hole 341a, and an upper end portion thereof may be exposed to an outside of the battery cell 10, through which contact portions of the first electrode pin 250a and the first rivet 340a may be welded to be joined to each other.

A material forming the first rivet 340a may be the same as a material forming the first electrode pin 250a inserted into the first rivet 340a. For example, when the first electrode pin 250a includes copper, the first rivet 340a may also include copper. Since the first rivet 340a and the first electrode pin 250a are formed of the same material, ease of coupling and joining reliability due to welding between the first rivet 340a and the first electrode pin 250a may be further increased.

Heat deflection may occur in the cap insulator 400 due to welding heat generated in a process of coupling the first electrode pin 250a and the first rivet 340a through welding. In this case, a thickness of the cap insulator 400 may be reduced, and a sealing force between the cap insulator 400 and the first fixing member 370a or between the cap insulator 400 and a gasket may be reduced, or a gap may occur, such that a foreign substance outside the battery cell 10 may flow into the gap or the electrolyte in the battery cell 10 may flow out through the gap.

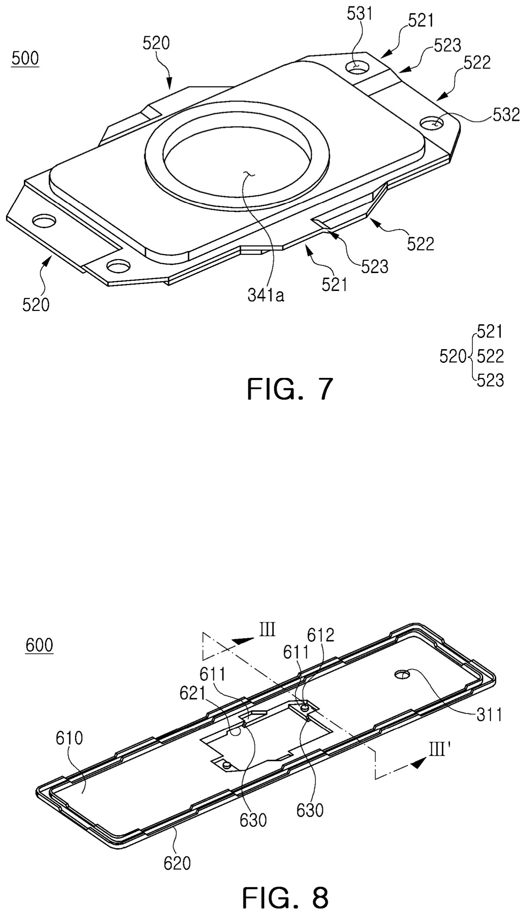

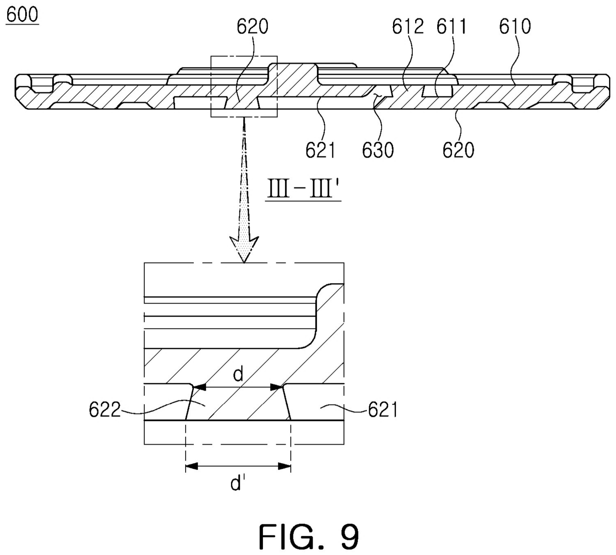

FIG. 6 is a perspective view of a cap insulator 400 according to an embodiment of the present disclosure, FIG. 7 is a perspective view of a first insulator 500 according to an embodiment of the present disclosure, FIG. 8 is a perspective view of a second insulator 600 according to an embodiment of the present disclosure, and FIG. 9 is a cross-sectional view of FIG. 8, taken along line III-III', according to an embodiment of the present disclosure.

Referring to FIGS. 6 to 9, together with FIGS. 1 to 5, a battery cell 10 according to an embodiment of the present disclosure may include an electrode assembly 200, a case 100 including at least one opening and forming an accommodation portion 150 accommodating the electrode assembly 200, and a cap assembly 300 coupled to the case 100, and the cap assembly 300 may include a cap plate 310 coupled to the opening, and a cap insulator 400 disposed between the cap plate 310 and the electrode assembly 200 to insulate the cap plate 310 and the electrode assembly 200, and the cap insulator 400 may include a first insulator 500 formed of a first material, and a second insulator 600 formed of a second material, different from the first material.

In this case, the cap assembly 300 may include an electrode terminal 320 electrically connected to the electrode assembly 200, with the cap plate 310 and the cap insulator 400 interposed therebetween.

Referring to FIGS. 6 and 7, a first insulator 500 according to an embodiment of the present disclosure will be described.

A first insulator 500 according to an embodiment of the present disclosure may include a body portion 510 having an insertion hole 341, and at least one coupling unit 520 connected to an outer circumferential surface of the body portion 510 and coupled to a second insulator 600.

In this case, the insertion hole 341 may be a hole formed to pass through the body portion 510 of the first insulator 500.

The first insulator 500 may electrically connect an electrode terminal portion 320 and an electrode assembly 200 through the insertion hole 341 of the body portion 510.

In more detail, the electrode assembly 200 may include an electrode pin 250 protruding in a width direction of a battery cell, for example, in the X-axis direction, and may be electrically connected to the electrode terminal portion 320 through the electrode pin 250.

The electrode assembly 200 may be electrically connected to the electrode terminal portion 320 by welding through the electrode pin 250. For example, a cap assembly 300 may include an electrode terminal portion 320 electrically connected to the electrode pin 250 of the electrode assembly 200 by welding, and the electrode terminal portion 320 of the cap assembly 300 may be electrically connected to the electrode assembly 200 by welding through the electrode pin 250.

In a cap insulator 400 according to an embodiment of the present disclosure, at least a portion of the first insulator 500 may be disposed in a second insulator 600 to be coupled.

In this case, a portion of the electrode terminal portion 320 or a portion of the electrode pin 250 may pass through the first insulator 500. Accordingly, the electrode terminal portion 320 and the electrode pin 250 may be electrically connected to each other, with the cap insulator 400 interposed therebetween.

The first material may be formed of a material having a heat deflection temperature higher than a heat deflection temperature of the second material.

In this case, the heat deflection temperature may be a temperature at which deformation starts to occur under a certain load. For example, in a state in which a predetermined load is applied to a material, a temperature may be increased, deformation of the material may be measured, and the heat deflection temperature may be a temperature at which deformation of the material exceeds a predetermined magnitude.

More specifically, the heat deflection temperature may be a temperature measured by ASTM D648 (standard test method for deflection temperature of plastics under the edgewise position).

For example, the heat deflection temperature may be measured by putting a specimen and a load (e.g., 0.455 MPa (megapascal) or 1.82 MPa) into a heat medium fluid and measuring a temperature when a central portion of the specimen is sagging 0.25 mm (millimeter) while heating the fluid.

In this case, the first material may be a polyphenylene sulfide (PPS), a crystallized polyethylene terephthalate (C-PET), a polyimide (PI), or the like, including at least a heat deflection temperature higher than 100°C, and the second material may be a polypropylene (PP) or the like having a heat deflection temperature lower than 100°C.

By first transferring welding heat generated in a process of electrically connecting the electrode terminal portion 320 and the electrode pin 250 to the first insulator 500 formed of a material having a high heat deflection temperature, deformation of the cap insulator 400 due to the welding heat between the electrode terminal portion 320 and the electrode pin 250 may be minimized.

The first insulator 500 may include at least one coupling unit 520 connected to an outer circumferential surface of the body portion 510 and coupled to the second insulator 600.

Referring to FIG. 7, a first insulator 500 may include a coupling unit 520 extending outwardly.

The coupling unit 520 may include a first support portion 521 facing and supporting a first surface 610 of a second insulator 600 to be described later, a second support portion 522 facing and supporting a second surface 620 of the second insulator 600, and a connection support portion 523 connecting the first support portion 521 and the second support portion 522.

In this case, the connection support portion 523 may pass through the second insulator 600.

In addition, at least one coupling unit 520 may be provided in the first support portion 521 or the second support portion 522, and may further include a coupling hole 530 through which a portion of the second insulator 600 passes.

The first insulator 500 illustrated in FIG. 7 may include coupling units 520 extending outwardly on four surfaces, respectively.

Some of the coupling units 520 may include a coupling hole 530 through which a portion of the second insulator 600 passes in the first support portion 521 and the second support portion 522, and a remaining portion of the coupling units 520 may not include a coupling hole 530 through which a portion of the second insulator 600 passes in the first support portion 521 and the second support portion 522.

For example, the first support portion 521 and the second support portion 522 may be provided to have different distances from one of both surfaces of the first insulator 500.

For example, when the first support portion 521 is disposed to be close to a lower surface of the first insulator 500, the second support portion 522 may be disposed to be far from the lower surface of the first insulator 500, and close to an upper surface of the first insulator 500.

When the first support portion 521 is disposed to be close to the upper surface of the first insulator 500, the second support portion 522 may be disposed to be far from the upper surface of the first insulator 500, and close to the lower surface of the first insulator 500.

In this case, the connection support portion 523 may connect the first support portion 521 and the second support portion 522, provided on different levels.

Referring to FIGS. 8 to 9, a second insulator 600 may include a protruding portion and a recess portion on at least one surface among both surfaces thereof.

In this case, among both surfaces of the second insulator 600, one surface may be referred to as a first surface 610, and the other surface may be referred to as a second surface 620.

The first surface 610 of the second insulator 600 may include a first recess portion 611 recessed toward the second surface 620, and the second surface 620 may include a second recess portion 621 recessed toward the first surface 610.

In addition, the first surface 610 may include a first protruding portion 612 protruding outward from the first recess portion 611, and the second surface 620 may include a second protruding portion 622 protruding outward from the second recess portion 621.

In this case, protrusion directions of the first protruding portion 612 and the second protruding portion 622 may be opposite to each other. Also, recession directions of the first recess portion 611 and the second recess portion 621 may be opposite to each other or may face each other.

Referring to FIG. 9, a second insulator 600 according to an embodiment of the present disclosure may include a protruding portion coupled to at least one of a first support portion 521 or a second support portion 522, and the protruding portion may be provided to have a cross-sectional area gradually increasing in an outward direction.

The protruding portion of the second insulator 600 may be provided to correspond to a coupling hole 530 of a first insulator 500.

Referring back to FIG. 8, together with FIG. 7, some of the coupling units 520 may include a coupling hole 530 through which a portion of the second insulator 600 passes in the first support portion 521 and the second support portion 522, and a remaining portion of the coupling units 520 may not include a coupling hole 530 through which a portion of the second insulator 600 passes in the first support portion 521 and the second support portion 522.

A protruding portion of the second insulator 600 may be also provided to correspond to the coupling hole 530, and a recess portion of some of the second insulator 600 may not include a protruding portion.

The present disclosure is not limited thereto, and a coupling hole may be provided in all coupling units 520 of the first insulator 500, and a protruding portion may be provided in all recess portions of the second insulator 600.

The first protruding portion 612 of the second insulator 600 may be provided through the first support portion 521, and the first protruding portion 612 may be provided such that a cross-sectional area d' at a point passing through the first support portion 521 is greater than a cross-sectional area d at a point contacting the first recess portion 611.

In addition, the second protruding portion 622 of the second insulator 600 may be provided to pass through the second support portion 522, and the second protruding portion 622 may be provided such that a cross-sectional area d' at a point passing through the second support portion 522 is greater than a cross-sectional area d at a point contacting the second recess portion 621.

The second insulator 600 may include a connection slit 630 through which the connection support portion 523 of the first insulator 500 can pass.

For example, the second insulator 600 may include a first surface 610, one surface, and a second surface 620, the other surface, among both surfaces of the second insulator 600, and a portion of the first insulator 500 may pass through the first surface 610 and the second surface 620.

More specifically, the first support portion 521 of the first insulator 500 may be provided such that the first protruding portion 612 passes through a first coupling hole 531 to be supported by the first recess portion 611 located on the first surface 610 of the second insulator 600.

The second support portion 522 of the first insulator 500 may be provided such that the second protruding portion 622 passes through a second coupling hole 532 to be supported by the second recess portion 621 located on the second surface 620 of the second insulator 600.

For example, the protruding portion may include a first protruding portion 612 coupled to the first support portion 521, and a second protruding portion 622 coupled to the second support portion 522, and protrusion directions of the first protruding portion 612 and the second protruding portion 622 may be opposite to each other.

In addition, the connection support portion 523 connecting the first support portion 521 and the second support portion 522 of the first insulator 500 may be provided to pass through and couple the first surface 610 and the second surface 620 through the connection slit 630 of the second insulator 600.

In this case, the first support portion 521 and the second support portion 522 may be disposed on the first surface 610 and the second surface 620 of the second insulator 600 through the connection slit 630, and may be coupled to the first protruding portion 612 and the second protruding portion 622, provided to increase a cross-sectional area in an outward direction, thereby increasing a coupling force between the first insulator 500 and the second insulator 600.

The first insulator 500 and the second insulator 600 may be manufactured by a double injection manufacturing method.

For example, a battery cell 10 according to an embodiment of the present disclosure may include a case 100 including at least one opening; and a cap assembly 300 accommodating an electrode assembly 200 together with the case 100, wherein the cap assembly 300 may include a cap plate 310 coupled to the opening; and a cap insulator 400 disposed between the cap plate 310 and the electrode assembly 200 to insulate the cap plate 310 from the electrode assembly 200, wherein the cap insulator 400 may include a first insulator 500 formed of a first material, and a second insulator 600 formed of a second material, different from the first material, and wherein the first insulator 500 and the second insulator 600 may be integrally manufactured through injection molding.

In this case, the cap insulator 400 may include a first insulator 500 formed of a first material, and a second insulator 600 formed of a second material, different from the first material.

In addition, the first material may be formed of a material having a higher melting point than the second material.

In this case, the first material may be a polyphenylene sulfide (PPS), a crystallized polyethylene terephthalate (C-PET), a polyimide (PI), or the like, having a melting point higher than approximately 250°C, and the second material may be a polypropylene (PP) or the like having a melting point lower than approximately 160°C.

By forming a large difference in melting points between the first material and the second material, the first insulator 500 provided as the first material and the second insulator 600 provided as the second material may be manufactured through a double injection process.

In more detail, the first insulator 500 formed of a first material having a higher melting point than the second material may be first injected to manufacture the first insulator 500. The cap insulator 400 including the first insulator 500 and the second insulator 600 may be manufactured by first injecting the first material into a mold, and then injecting the second material to form the second insulator 600.

Alternatively, the cap insulator 400 may be manufactured by first manufacturing the first insulator 500, disposing the first insulator 500 in a mold for the second insulator 600, and then injecting the second material to form the second insulator 600.

For example, the cap insulator 400 may be manufactured through double injection, and after the first material is injected first to manufacture the first insulator 500, the second material may be injected to manufacture the second insulator 600.

The first insulator 500 and the second insulator 600 may manufacture the cap insulator 400 by double injection through materials having different melting points, thereby removing an assembly process of the first insulator 500 and the second insulator 600 to improve productivity.

In this case, insert molding may refer to a method in which metal or other components (= inserts) are put into a mold in advance during plastic injection molding, and plastic may be injected thereon to be molded in an integrated manner.

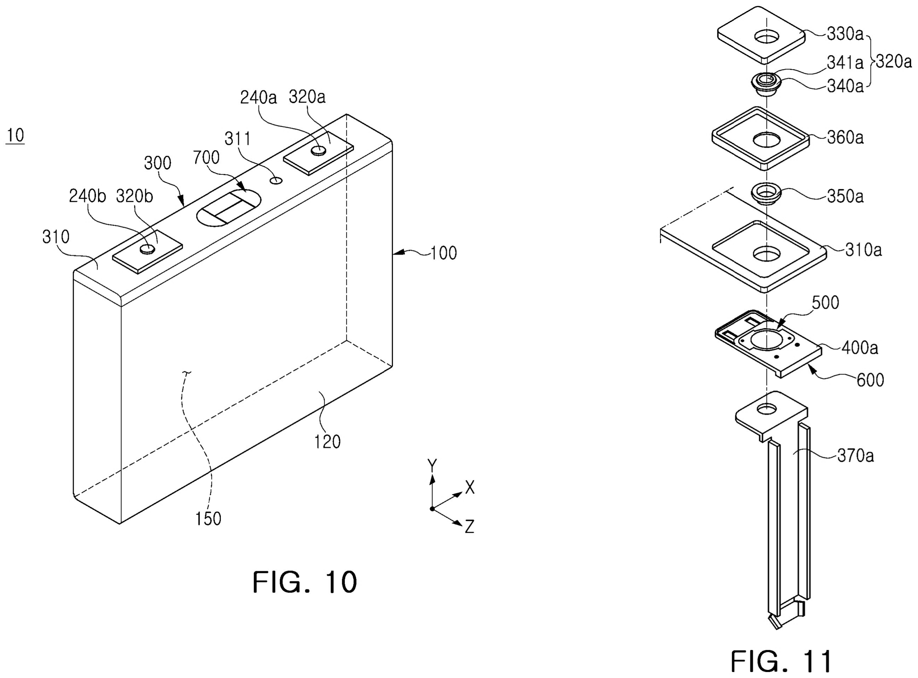

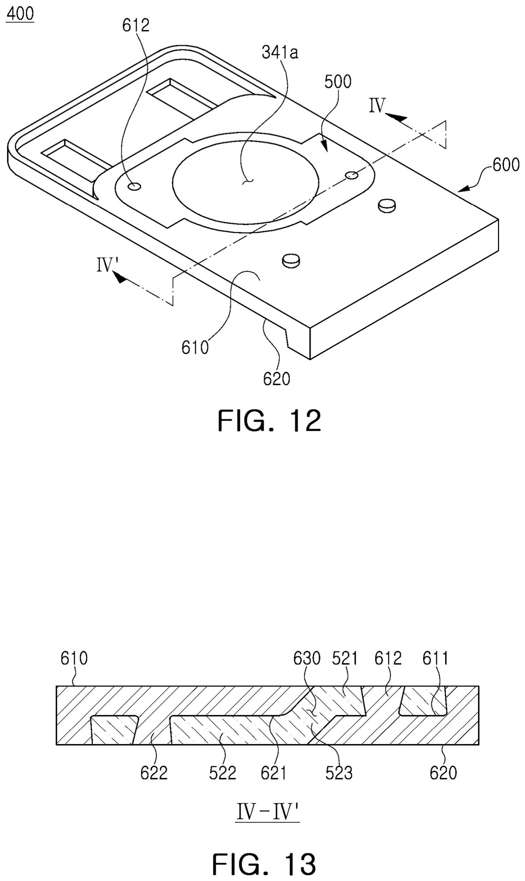

FIG. 10 is a perspective view of a battery cell including a cap assembly 300 according to an embodiment of the present disclosure, FIG. 11 is an exploded perspective view of a battery cell including a cap assembly 300 according to an embodiment of the present disclosure, FIG. 12 is a perspective view of a cap insulator 400 according to an embodiment of the present disclosure, and FIG. 13 is a cross-sectional view of FIG. 12, taken along line IV-IV', according to an embodiment of the present disclosure.

Referring to FIGS. 10 to 13, a cap insulator 400 according to an embodiment of the present disclosure applied to a unidirectional prismatic battery cell 10 will be described.

The battery cell 10 and components thereof described with reference to FIGS. 10 to 13 may correspond to the battery cell 10 and the components thereof described with reference to FIGS. 1 to 9, and thus a repeated description thereof may be omitted.

A battery cell 10 according to an embodiment of the present disclosure may include a case 100 having a structure in which one side is open and an accommodation portion 150 receiving an electrode assembly 200, and a cap assembly 300 coupled to the open one side of the case 100.

The electrode assembly 200 may be disposed in the accommodation portion 150 of the case 100.

The electrode assembly 200 may include a first electrode tab 240a and a second electrode tab 240b, arranged in parallel from one side.

Referring to FIG. 10 and FIG. 11, the cap assembly 300 may include a cap plate 310 coupled to the open one side of the case 100.

An electrode terminal portion 320 electrically connected to the electrode assembly 200 may be disposed on the cap plate 310. The battery cell 10 may be electrically connected to an external power source through the electrode terminal portion 320.

The electrode terminal portion 320 may include a first electrode terminal portion 320a, which may be a positive terminal, and a second electrode terminal portion 320b, which may be a negative terminal. The first electrode terminal portion 320a may be electrically connected to the first electrode tab 240a of the electrode assembly 200, and the second electrode terminal portion 320b may be electrically connected to the second electrode tab 240b of the electrode assembly 200.

The cap plate 310 may include a venting device 700.

In the present embodiment, the venting device 700 may be provided between the first electrode terminal portion 320a and the second electrode terminal portion 320b. The present disclosure is not limited thereto, and a position of the venting device 700 may be variously changed as necessary.

The cap plate 310 may include an electrolyte injection port 311. In the present embodiment, the electrolyte injection port 311 may be provided between the first electrode terminal portion 320a and the second electrode terminal portion 320b. The present disclosure is not limited thereto, and a position of the electrolyte injection port 311 may be variously changed as necessary.

In the unidirectional prismatic battery cell 10, a configuration of the cap assembly 300 according to an embodiment of the present disclosure may be described.

For convenience of description, an exploded perspective view of the first cap assembly 300a may be mainly described, and the second cap assembly 300b may also include the same configuration as the first cap assembly 300a.

Referring to FIG. 12 together with FIG. 11, a first cap assembly 300a according to an embodiment of the present disclosure may include a first electrode terminal portion 320a electrically connected to an electrode assembly 200, and a first cap plate 310a supporting the first electrode terminal portion 320a.

The first electrode terminal portion 320a of the first cap assembly 300a may include a first terminal unit 330a and a first rivet 340a.

In this case, the first terminal unit 330a may be disposed on the first cap plate 310a, to serve as a connection terminal in which a battery cell 10 is electrically connected to an external component (e.g., a conductive busbar) .

A portion of the first rivet 340a may be electrically connected to the first terminal unit 330a, and the other portion thereof may be connected to a first electrode pin 250a of the electrode assembly 200.

The first rivet 340a and the first terminal unit 330a may be provided in an integrated manner in the first electrode terminal portion 320a.

The first cap assembly 300a may further include a first terminal insulator 360a and a first gasket 350a, electrically separating the first electrode terminal portion 320a from the first cap plate 310a.

The first cap assembly 300a may include an insulating material, and may include a first cap insulator 400a preventing the first cap plate 310a from being short-circuited by contacting the electrode assembly 200 or an electrode pin 250.

Referring to FIGS. 12 to 13, a first cap insulator 400a according to an embodiment of the present disclosure may include a first insulator 500 formed of a first material and a second insulator 600 formed of a second material.

The first insulator 500 may include a coupling unit 520 extending outwardly.

The coupling unit 520 may include a first support portion 521 facing and supporting a first surface 610 of the second insulator 600, a second support portion 522 facing and supporting a second surface 620 of the second insulator 600, and a connection support portion 523 connecting the first support portion 521 and the second support portion 522, and the connection support portion 523 may pass through the second insulator 600.

The first surface 610 of the second insulator 600 may include a first recess portion 611 recessed toward the second surface 620, and the second surface 620 may include a second recess portion 621 recessed toward the first surface 610.

In addition, the first recess portion 611 may include a first protruding portion 612 protruding in an outward direction, and the second recess portion 621 may include a second protruding portion 622 protruding in an outward direction.

In this case, protrusion directions of the first protruding portion 612 and the second protruding portion 622 may be opposite to each other, and the protruding portions may be provided such that cross-sectional areas increase as heights thereof increase.

Since the first support portion 521, the second support portion 522, and the connection support portion 523 may have a structure passing through the second insulator 600 and may have a structure in which cross-sectional areas increase as heights thereof increase, the first insulator 500 and the second insulator 600 may be stably coupled to each other even though they have a thin thickness.

A heat deflection temperature of a first material may be higher than a heat deflection temperature of a second material.

Accordingly, even when welding heat between an electrode terminal portion and an electrode pin occurs, a first cap insulator 400a having a high heat deflection temperature receives welding heat first, such that a cap insulator 400 of the present disclosure may be less deformed by welding heat than the cap insulator 400 including only the second material.

A melting point of the first material may be higher than a melting point of the second material.

By using a difference in melting points, a first cap insulator 400a and a second cap insulator 400b may be manufactured through double injection.

By manufacturing the first cap insulator 400a and the second cap insulator 400b through double injection, a separate assembly process may be omitted, thereby improving productivity.

A cap insulator 400 was manufactured with only polypropylene (PP) in a thickness of 1,000 micrometers (µm) a cap insulator 400 in which a first insulator 500 was formed of polyphenylene sulfide (PPS) and a second insulator 600 was formed of polypropylene (PP) was manufactured to have the same thickness of 1,000 micrometers (µm), and a cap assembly 300 was assembled using each of the cap insulators 400 and welded to an electrode pin.

As a result, the cap insulator 400 formed of only polypropylene (PP) decreased in thickness by approximately 175 micrometers (µm) to reach 825 micrometers (µm), the first insulator 500 formed of polyphenylene sulfide (PPS), and the second insulator 600 formed of polypropylene (PP) decreased by approximately 20 micrometers (µm), to be deformed to reach 980 micrometers (µm), and it was confirmed that an amount of deformation of the cap insulator 400 according to an embodiment of the present disclosure was reduced.

According to embodiments of the present disclosure, a battery cell may have an improved cap assembly, thereby minimizing a change in dimension of components of a cap plate due to welding heat.

According to embodiments of the present disclosure, a battery cell may include an improved cap assembly, thereby preventing leakage of material in the battery cell through a cap plate due to thermal change during a manufacturing process.

The present disclosure also relates to the following aspects.

Aspect 1) A battery cell comprising:
an electrode assembly; a case including at least one opening and forming an accommodation portion accommodating the electrode assembly; and a cap assembly coupled to the case, wherein the cap assembly includes: a cap plate coupled to the opening; and a cap insulator disposed between the cap plate and the electrode assembly to insulate the cap plate from the electrode assembly, and wherein the cap insulator includes a first insulator formed of a first material, and a second insulator formed of a second material, different from the first material.

Aspect 2) The battery cell of aspect 1, wherein the first material is formed of a material having a heat deflection temperature higher than a heat deflection temperature of the second material.

Aspect 3) The battery cell of aspect 1 or 2, wherein at least a portion of the first insulator is disposed in and coupled to the second insulator.

Aspect 4) The battery cell of aspect 1, wherein the second insulator includes a first surface, one surface, and a second surface, the other surface, among both surfaces of the second insulator, and a portion of the first insulator passes through the first surface and the second surface.

Aspect 5) The battery cell of aspect 4, wherein the first insulator includes: a body portion including an insertion hole; and at least one coupling unit connected to an outer circumferential surface of the body portion and coupled to the second insulator.

Aspect 6) The battery cell of aspect 5, wherein the coupling unit includes: a first support portion facing and supporting the first surface of the second insulator; a second support portion facing and supporting the second surface of the second insulator; and a connection support portion connecting the first support portion and the second support portion.

Aspect 7) The battery cell of aspect 6, wherein the second insulator includes a protruding portion coupled to at least one of the first support portion or the second support portion, and wherein the protruding portion has a cross-sectional area increasing in an outward direction.

Aspect 8) The battery cell of aspect 7, wherein the protruding portion includes a first protruding portion coupled to the first support portion, and a second protruding portion coupled to the second support portion, and wherein a protrusion direction of the first protruding portion is opposite to a protrusion direction of the second protruding portion.

Aspect 9) The battery cell of any one of aspects 1 to 8, wherein the cap assembly includes an electrode terminal portion electrically connected to the electrode assembly, with the cap plate and the cap insulator interposed therebetween.

Aspect 10) The battery cell of aspect 9, wherein the electrode assembly is welded and electrically connected to the electrode terminal portion through an electrode pin.

Aspect 11) The battery cell of aspect 10, wherein a portion of the electrode terminal portion or a portion of the electrode pin passes through the cap insulator.

Aspect 12) The battery cell of any one of aspects 1 to 11, wherein the first insulator and the second insulator are integrally manufactured through injection molding.

Aspect 13) The battery cell of any one of aspects 1 to 12, wherein the first material is formed of a material with a higher melting point than the second material.

Aspect 14) The battery cell of any one of aspects 1 to 13, wherein the cap insulator is manufactured through double injection, and wherein, after the first material is first injected to manufacture the first insulator, the second material is injected to manufacture the second insulator.

## Claims

1. A battery cell comprising:
an electrode assembly;
a case including at least one opening and forming an accommodation portion accommodating the electrode assembly; and
a cap assembly coupled to the case,
wherein the cap assembly includes:
a cap plate coupled to the opening; and
a cap insulator disposed between the cap plate and the electrode assembly to insulate the cap plate from the electrode assembly, and
wherein the cap insulator includes a first insulator formed of a first material, and a second insulator formed of a second material, different from the first material.

2. The battery cell of claim 1, wherein the first material is formed of a material having a heat deflection temperature higher than a heat deflection temperature of the second material.

3. The battery cell of claim 1 or 2, wherein at least a portion of the first insulator is disposed in and coupled to the second insulator.

4. The battery cell of claim 1, wherein the second insulator includes a first surface, one surface, and a second surface, the other surface, among both surfaces of the second insulator, and
a portion of the first insulator passes through the first surface and the second surface.

5. The battery cell of claim 4, wherein the first insulator includes:
a body portion including an insertion hole; and
at least one coupling unit connected to an outer circumferential surface of the body portion and coupled to the second insulator.

6. The battery cell of claim 5, wherein the coupling unit includes:
a first support portion facing and supporting the first surface of the second insulator;
a second support portion facing and supporting the second surface of the second insulator; and
a connection support portion connecting the first support portion and the second support portion.

7. The battery cell of claim 6, wherein the second insulator includes a protruding portion coupled to at least one of the first support portion or the second support portion, and
wherein the protruding portion has a cross-sectional area increasing in an outward direction.

8. The battery cell of claim 7, wherein the protruding portion includes a first protruding portion coupled to the first support portion, and a second protruding portion coupled to the second support portion, and
wherein a protrusion direction of the first protruding portion is opposite to a protrusion direction of the second protruding portion.

9. The battery cell of any one of claims 1 to 8, wherein the cap assembly includes an electrode terminal portion electrically connected to the electrode assembly, with the cap plate and the cap insulator interposed therebetween.

10. The battery cell of claim 9, wherein the electrode assembly is welded and electrically connected to the electrode terminal portion through an electrode pin.

11. The battery cell of claim 10, wherein a portion of the electrode terminal portion or a portion of the electrode pin passes through the cap insulator.

12. The battery cell of any one of claims 1 to 11, wherein the first insulator and the second insulator are integrally manufactured through injection molding.

13. The battery cell of any one of claims 1 to 12, wherein the first material is formed of a material with a higher melting point than the second material.

14. The battery cell of any one of claims 1 to 13, wherein the cap insulator is manufactured through double injection, and
wherein, after the first material is first injected to manufacture the first insulator, the second material is injected to manufacture the second insulator.
